# EUROPEAN PATENT SPECIFICATION

(11) **EP 1 094 715 B1**
(45) Date of publication and mention of the grant of the patent: **01.12.2004**
(21) Application number: 99934598.6
(22) Date of filing: 05.07.1999
(51) Int. Cl.: A21D 8/04, A21D 2/26

(54) **FERMENTED, PASTEURISED PREFERMENT**
FERMENTIERTES, PASTEURISIERTES PREFERMENT
PREFERMENTS FERMENTES PASTEURISES

(30) Priority: 09.07.1998 EP 98202328
(43) Date of publication of application: 02.05.2001
(73) Proprietor: CSM Nederland B.V., 1112 XE Diemen (NL)
(72) Inventor: BELLISSEN, Laurence, NL-3013 AL Rotterdam (NL); GIUSEPPIN, Marco, Luigi Unilever Res. Vlaardingen, NL-3133 AT Vlaardingen (NL); OUWEHAND, Jan Unilever Research Vlaardingen, NL-3133 AT Vlaardingen (NL); TER SCHURE, Eelko Unilever Research Vlaardingen, NL-3133 AT Vlaardingen (NL)
(74) Representative: van Westenbrugge, Andries
(86) International application number: PCT/EP1999/004733
(87) International publication number: WO 2000/002457

(56) References cited:
- EP-A- 0 684 308
- EP-A- 0 806 144
- WO-A-95/13706
- WO-A-96/13981
- US-A- 5 221 617

## Description

Baking improver compositions are well known in the bakery area. These are often used for improving the baking performance of doughs, resulting in improved baked products, but regularly they are also used to improve the properties of a dough sothat the handling of the dough is easier. Eg the compositions disclosed in WO 95/13706 are said to solve the problems of the presence of high amounts of gluten in doughs (ie dough toughness and inflexibility). According to this WO compositions are made by a process wherein cereal germs are fermented in the presence of a starter culture comprising lactic acid and/or propionic acid forming bacteria. The starter culture can also contain yeast and other enzymes like lipase, or glycosidase (in particular amylase). Although the compositions disclosed solve above problems in an acceptable way these compositions also have a number of drawbacks. Ie the compositions are insufficiently intense in flavour ingredients, sothat relatively large amounts must be used in order to achieve a desired flavour intensity by the addition of these compositions. This is due to a number of factors as we found out. First of all the compositions are relatively rich in long and medium chain free fatty acids (more than 5 wt%) and these free fatty acids have a negative impact on total flavour profile. The acids present are mainly acetic acid and lactic acid however in a ratio of acetic acid to lactic acid that does not give the optimum flavour impression when applied in bread dough. Further the compositions are relatively low in dry matter content. All this results in the fact that to achieve an acceptable flavour impression by addition of these compositions relatively large amounts have to be added, whereas the taste even then is not optimal.

Similar products and processes are disclosed in EP 684306; EP 684307 and EP 684308. So it will not be a surprise that the products disclosed herein have similar drawbacks as the products from WO'706.

According to EP 806 144 an improver is made, that generates a typical bread taste by mixing raw cereal materials with beer yeast extract and by adding at least one amylase and at least one amyloglucosidase to the mixture so obtained. After heating for 10-30 min at 50 - 80 oC, cooling to 55 oC and addition of at least two protease's under maintenance of the mixture at 55 oC for 30 min to 4 hrs a sterilisation/fermentation is performed using LAB-type cultures. This process is very complicated and does not result in products with the intense flavour that we obtain.

We have studied whether we could find new products and new processes to obtain products that would not have the drawbacks of the prior art discussed above. This study resulted in the finding of new products and novel processes to make these products. Therefore our invention concerns in the first instance a fermented, pasteurised preferment comprising:
the fermentation product of a mixture of gluten and bran resulting from the hydrolysis thereof with protease and/or lipase and/or a glycosidase and/or glycanase, preferably a glucanase, followed by a fermentation with an acid forming bacterium, preferably lactic acid forming bacteria and a yeast, preferably in the presence of enzymes capable of liberating flavour ingredients or flavour precursors from proteins and/or carbohydrates, preferably selected from proteases and another glycosidase and/or glycanase, in particular amylases, which fermented, pasteurised preferment displays a free fatty acid content of less than 5 wt% on dry matter, preferably less than 3 wt% and/or displays a weight ratio between acetic acid and lactic acid of more than 0.25, preferably 0.3-0.75.

Glycosidases are enzymes that can split off one end standing sugar-moiety from a carbohydrate, whereas glycanases are enzymes that can split off larger (non-monomeric) moieties from carbohydrates. Examples of glycosidases and glycanases are: glucanase; amylases; cellulase, hemi-cellulases, glucosidase, galactosidase etc.

Even better products are obtained if sugars and/or amino acids are externally added to the fermentation culture prior to, during or after the fermentation. This then results in fermented, pasteurised preferment according to claim 1, wherein the preferment also comprises the fermentation products of externally added amounts of sugars and/or amino acids resulting from a fermentation with the micro-organisms and/or enzymes mentioned in claim 1.
In addition to above also other enzymes could be applied in the fermentation culture in addition to the ingredients mentioned above. In that case fermented, pasteurised preferments are obtained that also comprise the fermentation products of carbohydrates and other glycosidase c.g. glycanase-enzymes selected from hemi-cellulase and cellulase.

Although sources for gluten and bran could be any known source we found that very good results were obtained when we used gluten and bran derived from wheat.

The novel products that we found have higher dry matter contents than the products from the prior art. So our prefermented, pasteurised preferments have a dry matter content of more than 32 wt%, preferably more than 35 wt%, in particular 35-50 wt%.

Although our product could be made by different novel process routes we found that far the best products are obtained by a process, wherein:
1) a mixture of gluten and bran is fermented with a glycosidase and/or glycanase, preferably a glucanase in the presence of water at a temperature of less than 80 °C
2) the fermented product resulting from step 1) is cooled to a temperature below 45 °C
3) the cooled product of step 2) is subjected to a fermentation with acid forming bacteria and yeast at a temperature below 45 °C
4) the product obtained after step 3) is pasteurised.

In this process it is very beneficial to perform step 3) after a treatment of the product of step 2) with amylase and/or protease, or in the presence of enzymes that are capable of forming flavour ingredients and/or flavour precursors from proteins and/or carbohydrates. Typical examples of these enzymes are amylases and proteases.

The fermentation needs to be performed in the presence of water. We found that very good results are obtained if the amount of water in step 1) of our novel process is adjusted to 40-80 wt % on total of gluten, bran and water. Very good results were obtained by using 50-60 wt % of water in step 1).

Gluten and bran can be applied in a wide range of ratio's however we found that the best results are obtained if gluten and bran are used in a weight ratio of 5:1 to 1:1.

Yeast has to be added to the fermentation mix, suitable amounts are amounts of 10² to 10⁶ cells per ml of mix of water, gluten and bran. Very good results were obtained by using Saccharomyces cerevisiae as yeast.

The acid forming bacteria can be added in a wide range of amounts, suitable amounts being 10⁵ to 10¹⁰ cells per ml of mix of water, gluten and bran. Very good results were obtained by using Lactobacillus brevis as acid forming bacterium.

The glucanases, as example of glycanase, are used in amounts of 0.1 % (w/w) - 3 % (w/w) preferably at 0.1-0.2% on mix of water, gluten and bran. These enzymes can have an activity of 500 betaglucanase units/ml, measured according to the amount of glucose moieties released per minute using betaglucane as substrate.

Proteases can be added in amounts of 0.04 % (w/w) to 1% (w/w) preferably at 0.05 %-0.08% on mix of water, gluten and bran. These proteases can have an activity of 80000 HUT units/ml, measured according to the amount of tyrosine released per minute using hemoglobine as substrate.
Glycosidase are applied in amounts of 0.03 % (w/w) - 3% (w/w) preferably at 0.05 % - 1 % on mix of water, gluten and bran. These enzymes can have an activity of 1100 amyloglucosidase GOPAP units/ml, measured according to glucoseoxidase peroxidase amino phenezoni (GOPAP) assay in which one unit is defined as moeities per minute. A very convenient process, resulting in excellent products is obtained by performing the fermentation with acid forming bacteria in the presence of externally added culture medium in the form of hydrolysed carbohydrate, preferably being glucose, while the pH of the fermenting liquid is controlled within the range of 4-9 and preferably oxygen, in particular in the form of air is introduced in the fermentation liquid, in such an amounts that enough acetate is produced in order to obtain an acetate lactate ratio of 0.25 (preferably with a rate of at least 1 liter air per min per 100 liter fermentation liquid).

### EXAMPLES AND COMPARATIVE EXAMPLES

### Example 1.

### Production of a gluten based fermented pasteurised preferment.

Experiments were carried out in glass walled fermentors having a metal bottom plate and a metal head plate. The fermentor was supplied with a metal heating jacket, temperature probe, pH probe, and rushton type of stirrors. The volume of the fermentor vessel was 15 litre. The fermentor was filled with 3228 g of water, 2040 g of wheat gluten and 732 g of wheat bran. After the dry matter was dissolved 10.2 g of promalt 295 (Quest biocon Activity 500 betaglucanase units/ml) is added. The mixture was incubated at 58 °C for 30 min and subsequently pasteurised at 85 °C for 30 min. Hereafter the ferment was cooled down to 30 °C. When during the cooling stage the temperature reached 50 °C 2 g bioprotease FL (Quest Biocon Activity 80000 HUT units/ml), dissolved in 6 ml sterile water was added. As soon as the temperature reached 30 °C 3.6 g of amylo 300 (Quest Biocon Activity 1100 amyloglucosidase GOPAP units/ml) and 1 g bioprotease FL (Quest Biocon Activity 80000 HUT units/ml), suspended in 3 ml water, were added. Hereafter a washed preculture of both *L. brevis* and *S. cerevisiae* were added This was followed by a fermentation phase of 72 h at 30 °C at pH 5 by continuous addition of 8 M NaOH. After 24 h of fermentation 300 g of glucose were added via a hole in the headplate of the fermentor and air was supplied at a rate of 0.08 V/V/Min. Hereafter the ferment was pasteurised at 80 °C for 30 min.

The dry matter and fatty acid content and the concentrations of lactate, acetate and ethanol of the fermented, pasteurised preferment are presented in Table 1.

**Table 1.**

| Dry matter content, fat content, lactate and acetate in a gluten based fermented pasteurised preferment. | |
|---|---|
| | concentration |
| dry matter content | 40 wt% |
| FFA content | 1.3 wt% |
| lactate | 45 g/l |
| acetate | 15 g/l |

The final product was subsequently dried using the technique of spray drying. The optimal inlet temperature of the drying tower was determined to be 180 °C and the outlet temperature was about 60 to 80 °C.

The product has been tested and evaluated in QDA panel test and it appeared that it improved the flavour of the bread.

### Example 2

### Production of a fermented wheat product.

A fermented wheat germ product has been produced according to the process described in WO 95/13706. The characteristics of this bread improver are presented in table 2. Experiments in our own laboratory revealed that the maximal dry matter content was 32 wt% (w/w).

**Table 2.**

| Characteristics of a fermented wheat germ liquid product produced by us according to the process described in WO 95/13706 | |
|---|---|
| Maximal dry Matter content | 32 wt% |
| FFA content | 6 wt% |
| lactate | 23 g/l |
| acetate | 3 g/l |

## Claims

1. Fermented, pasteurised preferment comprising:
the fermentation product of a mixture of gluten and bran resulting from the hydrolysis thereof with a protease and/or lipase and/or glycosidase and/or glycanase, preferably a glucanase, followed by a fermentation with an acid forming bacterium, preferably lactic acid forming bacteria and a yeast, preferably in the presence of enzymes capable of liberating flavour ingredients or flavour precursors from proteins and/or carbohydrates, preferably selected from proteases and another glycosidase and/or glycanase, in particular amylases, which fermented, pasteurised preferment displays a free fatty acid content of less than 5 wt% on dry matter, preferably less than 3 wt% and/or displays a weight ratio between acetic acid and lactic acid of more than 0.25, preferably 0.3-0.75.

2. Fermented pasteurised preferment according to claim 1, wherein the preferment also comprises the fermentation products of externally added amounts of sugars and/or amino acids resulting from a fermentation with the micro-organisms and/or enzymes mentioned in claim 1 or externally added amounts of sugars and amino acids as such.

3. Fermented, pasteurised preferment according to claims 1 or 2, wherein the preferment also comprises fermentation products of carbohydrates and other enzymes selected from hemi-cellulase and cellulase.

4. Fermented, pasteurised preferment according to claims 1-3, wherein the gluten and the bran are both from wheat.

5. Fermented, pasteurised preferment according to claims 1-4, wherein the preferment has a dry matter content of more than 32 wt%, preferably more than 35 wt%, in particular 35-50 wt%

6. Process for the production of a pasteurised preferment with the composition according to claims 1-5, wherein:
1) a mixture of gluten and bran is fermented with a glycosidase and/or glycanase, preferably a glucanase in the presence of water at a temperature of less than 80 °C
2) the fermented product resulting from step 1) is cooled to a temperature below 45 °C
3) the cooled product of step 2) is subjected to a fermentation with acid forming bacteria and yeast at a temperature below 45 °C
4) product obtained after step 3) is pasteurised.

7. Process according to claim 6, wherein the fermentation in step 3) is performed after a treatment of the product of step 2) with amylase and/or protease, or in the presence of enzymes capable of forming flavour ingredients and/or flavour precursors from proteins and/or carbohydrates.

8. Process according to claim 7, wherein the enzymes capable of forming flavour ingredients and/or flavour precursors are selected from amylases and proteases.

9. Process according to claims 6-8, wherein the amount of water used in step 1 of claim 6 is between 40 and 80 wt% on total of gluten, bran and water applied.

10. Process according to claims 6-9, wherein the gluten and bran are both derived from wheat and are applied in a weight ratio of 5:1 to 1:1

11. Process according to claims 6-10, wherein the yeast, preferably Saccharomyces cerevisae, is added in an amount of 10² to 10⁶ cells per ml of mix of water, gluten and bran.

12. Process according to claims 6-11, wherein the acid forming bacterium is a LAB, preferably a Lactobacillus brevis and is added in an amount of 10⁵ to 10¹⁰ cells per inl of mix of water, gluten and bran.

13. Process according to claims 6-12, wherein the glucanase is applied in an amount of 0.1% (w/w) - 3% (w/w) preferably at 0.1-0.2% on mix of water, gluten and bran.

14. Process according to claims 7-13, wherein the protease is applied in amounts of 0.04% (w/w) to 1% (w/w) preferably at 0.05%-0.08% on mix of water, gluten and bran.

15. Process according to claims 6-14, wherein the glycosidase is applied in amounts of 0.03% (w/w) to 3% (w/w) preferably at 0.05%-1% on mix of water, gluten and bran.

16. Process according to claims 6-15, wherein the fermentation with acid forming bacteria is performed in the presence of externally added, culture medium in the form of hydrolysed carbohydrate, preferably being glucose, while the pH of the fermenting liquid is controlled within the range of 4-9 and preferably oxygen, in particular in the form of air is introduced in the fermentation liquid.

## Patentansprüche

1. Fermentiertes, pasteurisiertes Vorferment, welches
das Fermentationsprodukt eines Gemischs aus Gluten und Kleie umfaßt, resultierend aus der Hydrolyse davon mit einer Protease und/oder Lipase und/oder Glykosidase und/oder Glykanase, vorzugsweise einer Glukanase, gefolgt von einer Fermentation mit einem säurebildenden Bakterium, vorzugsweise Milchsäure-bildenden Bakterien, und einer Hefe, vorzugsweise in Anwesenheit von Enzymen, welche zur Freisetzung von Geschmacksinhaltsstoffen oder Geschmacksstoffvorläufern aus Proteinen und/oder Kohlehydraten befähigt sind, vorzugsweise ausgewählt aus Proteasen und einer weiteren Glykosidase und/oder Glykanase, insbesondere Amylasen, wobei das fermentierte, pasteurisierte Vorferment einen Gehalt an freien Fettsäuren von weniger als 5 Gew.-% in Trockensubstanz, vorzugsweise weniger als 3 Gew.-%, zeigt und/oder ein Gewichtsverhältnis zwischen Essigsäure und Milchsäure von mehr als 0,25, vorzugsweise 0,3 - 0,75, zeigt.

2. Fermentiertes, pasteurisiertes Vorferment nach Anspruch 1, wobei das Vorferment auch die Fermentationserzeugnisse von extern hinzugefügten Mengen von Zuckern und/oder Aminosäuren, die aus einer Fermentation mit den in Anspruch 1 erwähnten Mikroorganismen und/oder Enzymen resultieren, oder extern hinzugefügte Mengen von Zuckern und Aminosäuren als solche umfaßt.

3. Fermentiertes, pasteurisiertes Vorferment nach Ansprüchen 1 oder 2, wobei das Vorferment auch die Fermentationserzeugnisse von Kohlehydraten und anderen Enzymen, ausgewählt aus Hemicellulase und Cellulase, umfaßt.

4. Fermentiertes, pasteurisiertes Vorferment nach Ansprüchen 1 - 3, wobei sowohl das Gluten als auch die Kleie aus Weizen stammen.

5. Fermentiertes, pasteurisiertes Vorferment nach Ansprüchen 1 - 4, wobei das Vorferment einen Trockensubstanz-Gehalt von mehr als 32 Gew.-%, vorzugsweise mehr als 35 Gew.-%, insbesondere 35 - 50 Gew.-%, aufweist.

6. Verfahren zum Herstellen eines pasteurisierten Vorferments mit der Zusammensetzung nach Ansprüchen 1 - 5, wobei
1) ein Gemisch aus Gluten und Kleie mit einer Glykosidase und/oder Glykanase, vorzugsweise einer Glukanase, in Anwesenheit von Wasser bei einer Temperatur von weniger als 80°C fermentiert wird,
2) das fermentierte, aus Schritt 1) resultierende Erzeugnis auf eine Temperatur unter 45°C abgekühlt wird,
3) das abgekühlte Erzeugnis von Schritt 2) einer Fermentation mit säurebildenden Bakterien und Hefe bei einer Temperatur unter 45°C unterworfen wird,
4) das nach Schritt 3) erhaltene Erzeugnis pasteurisiert wird.

7. Verfahren nach Anspruch 6, wobei die Fermentation in Schritt 3) nach einer Behandlung des Erzeugnisses von Schritt 2) mit Amylase und/oder Protease oder in Anwesenheit von Enzymen, die zum Bilden von Geschmacksinhaltsstoffen und/oder Geschmacksstoffvorläufern aus Proteinen und/oder Kohlehydraten befähigt sind, durchgeführt wird.

8. Verfahren nach Anspruch 7, wobei die Enzyme, die zum Bilden von Geschmacksinhaltsstoffen und/oder Geschmacksstoffvorläufern befähigt sind, aus Amylasen und Proteasen ausgewählt sind.

9. Verfahren nach Ansprüchen 6 - 8, wobei die in Schritt 1) von Anspruch 6 verwendete Wassermenge zwischen 40 und 80 Gesamtgew.-% der verwendeten Gluten, Kleie und Wasser ist.

10. Verfahren nach Ansprüchen 6 - 9, wobei sowohl das Gluten als auch die Kleie von Weizen stammen und in einem Gewichtsverhältnis von 5:1 bis 1:1 verwendet werden.

11. Verfahren nach Ansprüchen 6 - 10, wobei die Hefe, vorzugsweise Saccharomyces cerevisae, in einer Menge von 10² bis 10⁶ Zellen pro ml des Gemischs aus Wasser, Gluten und Kleie hinzugefügt wird.

12. Verfahren nach Ansprüchen 6 - 11, wobei das säurebildende Bakterium ein LAB, vorzugsweise ein Lactobacillus brevis, ist und in einer Menge von 10⁵ bis 10¹⁰ Zellen pro ml des Gemischs aus Wasser, Gluten und Kleie hinzugefügt wird.

13. Verfahren nach Ansprüchen 6 - 12, wobei die Glukanase in einer Menge von 0,1% (w/w) - 3% (w/w), vorzugsweise bei 0,1 - 0,2%, im Gemisch aus Wasser, Gluten und Kleie verwendet wird.

14. Verfahren nach Ansprüchen 7 - 13, wobei die Protease in Mengen von 0,04% (w/w) bis 1% (w/w), vorzugsweise bei 0,05% - 0,08%, im Gemisch aus Wasser, Gluten und Kleie verwendet wird.

15. Verfahren nach Ansprüchen 6 - 14, wobei die Glykosidase in Mengen von 0,03% (w/w) bis 3% (w/w), vorzugsweise bei 0,05% - 1%, im Gemisch aus Wasser, Gluten und Kleie verwendet wird.

16. Verfahren nach Ansprüchen 6 - 15, wobei die Fermentation mit säurebildenden Bakterien in Anwesenheit von extern hinzugefügtem Kulturmedium in Form von hydrolisiertem Kohlehydrat, das vorzugsweise Glukose ist, durchgeführt wird, während der pH-Wert der Fermentierungsflüssigkeit in einem Bereich von 4 - 9 kontrolliert wird und vorzugsweise Sauerstoff, insbesondere in Form von Luft, in die Fermentationsflüssigkeit eingeleitet wird.

## Revendications

1. Pré-ferment pasteurisé et fermenté, comprenant le produit de fermentation d'un mélange de gluten et de son, résultant de leur hydrolyse avec une protéase et/ou une lipase et/ou une glycosidase et/ou une glycanase, de préférence une glucanase, suivie d'une fermentation avec une bactérie formant de l'acide, de préférence une bactérie formant de l'acide lactique et une levure, de préférence en présence d'enzymes capables de libérer des ingrédients d'arômes ou des précurseurs d'arômes à partir de protéines et/ou de glucides, de préférence choisies parmi les protéases et une autre glycosidase et/ou glycanase, en particulier des amylases, lequel pré-ferment pasteurisé et fermenté, présente une teneur en acides gras libres de moins de 5% en masse sur la matière sèche, de préférence moins de 3%, et/ou présente un rapport massique entre l'acide acétique et l'acide lactique de plus de 0,25, et de préférence de 0,3 à 0,75.

2. Pré-ferment pasteurisé et fermenté selon la revendication 1, dans lequel le pré-ferment comprend également les produits de fermentation de quantités ajoutées par voie externe de sucres et/ou d'acides aminés résultant d'une fermentation avec les micro-organismes et/ou enzymes mentionnés dans la revendication 1, ou de quantités ajoutées par voie externe de sucres et d'acides aminés en tant que tels.

3. Pré-ferment pasteurisé et fermenté selon les revendications 1 ou 2, dans lequel le pré-ferment comprend également des produits de fermentation de glucides et d'autres enzymes choisies parmi les hémi-cellulases et cellulases.

4. Pré-ferment pasteurisé et fermenté selon les revendications 1 à 3, dans lequel le gluten et le son proviennent tous les deux de blé.

5. Pré-ferment pasteurisé et fermenté selon les revendications 1 à 4, dans lequel le pré-ferment présente une teneur en matières sèches de plus de 32% en masse, de préférence de plus de 35% en masse, et en particulier de 35 à 50 % en masse.

6. Procédé de production d'un pré-ferment pasteurisé avec la composition selon l'une des revendications 1 à 5, dans lequel :
1) un mélange de gluten et de son est fermenté avec une glycosidase et/ou une glycanase, de préférence une glucanase, en présence d'eau à une température de moins de 80°C ;
2) le produit fermenté résultant de l'étape 1) est refroidi à une température en dessous de 45°C ;
3) le produit refroidi de l'étape 2) est soumis à une fermentation avec une bactérie formant de l'acide et une levure à une température en dessous de 45°C ;
4) le produit obtenu après l'étape 3) est pasteurisé.

7. Procédé selon la revendication 6, dans lequel la fermentation de l'étape 3) est effectuée après un traitement du produit de l'étape 2) avec de l'amylase et/ou de la protéase, ou en présence d'enzymes capables de former des ingrédients d'arômes et/ou des précurseurs d'arômes à partir de protéines et/ou de glucides.

8. Procédé selon la revendication 7, dans lequel les enzymes capables de former des ingrédients d'arômes et/ou des précurseurs d'arômes sont choisies parmi les amylases et les protéases.

9. Procédé selon les revendications 6 à 8, dans lequel la quantité d'eau utilisée dans l'étape 1 de la revendication 6 représente entre 40 et 80% en masse du total de gluten, de son et d'eau appliqués.

10. Procédé selon les revendications 6 à 9, dans lequel le gluten et le son sont tous les deux dérivés de blé et sont appliqués dans un rapport massique de 5:1 à 1:1.

11. Procédé selon les revendications 6 à 10, dans lequel la levure, de préférence Saccharomyces cerevisae, est ajoutée dans une quantité de 10² à 10⁶ cellules par ml de mélange d'eau, de gluten et de son.

12. Procédé selon les revendications 6 à 11, dans lequel la bactérie formant de l'acide est une LAB, de préférence une Lactobacillus brevis et est ajoutée dans une quantité de 10⁵ à 10¹⁰ cellules par ml de mélange d'eau, de gluten et de son.

13. Procédé selon les revendications 6 à 12, dans lequel la glucanase est appliquée dans une quantité de 0,1% (p/p) à 3% (p/p), de préférence de 0,1 à 0,2% du mélange d'eau, de gluten et de son.

14. Procédé selon les revendications 7 à 13, dans lequel la protéase est appliquée dans une quantité de 0,04% (p/p) à 1% (p/p), de préférence de 0,05 à 0,08% du mélange d'eau, de gluten et de son.

15. Procédé selon les revendications 6 à 14, dans lequel la glycosidase est appliquée dans une quantité de 0,03% (p/p) à 3% (p/p), de préférence de 0,05 à 1% du mélange d'eau, de gluten et de son.

16. Procédé selon les revendications 6 à 15, dans lequel la fermentation avec la bactérie formant de l'acide est effectuée en présence d'un milieu de culture ajouté par voie externe sous la forme de glucide hydrolysé, de préférence de glucose, tandis que le pH du liquide de fermentation est contrôlé dans la gamme de 4 à 9 et de préférence de l'oxygène, notamment sous la forme d'air, est introduit dans le liquide de fermentation.
